# EUROPÄISCHE PATENTSCHRIFT

(11) **EP 1 563 891 B1**
(45) Veröffentlichungstag und Bekanntmachung des Hinweises auf die Patenterteilung: **05.05.2010**
(21) Anmeldenummer: 04030310.9
(22) Anmeldetag: 21.12.2004
(51) Int. Cl.: B01D 53/84

(54) **Filter zum Reinigen von bei biologischen Abbauprozessen gebildeter Luft**
Filter for cleaning air from biological decomposition processes
Filtre pour purifier l'air de procédés de décomposition biologique

(30) Priorität: 11.02.2004 DE 102004006717; 23.07.2004 DE 102004035839
(43) Veröffentlichungstag der Anmeldung: 17.08.2005
(73) Patentinhaber: HAGOLA Biofilter GmbH, 48424 Goldenstedt (DE)
(72) Erfinder: Hakemann, Fritz, 48424 Goldenstedt (DE); Rakers, Stefan, 27239 Twistringen (DE)
(74) Vertreter: Heim, Hans-Karl

(56) Entgegenhaltungen:
- EP-A- 1 234 609
- WO-A-02/085499
- CH-A- 679 644
- DE-A- 1 943 848
- DE-A- 2 757 317
- DE-A1- 4 235 591
- DE-C1- 10 062 119
- DE-U1- 20 022 268
- US-A- 5 656 494

## Beschreibung

Die Erfindung betrifft einen Filter zum Reinigen von bei biologischen Abbauprozessen gebildeter Abluft gemäß Oberbegriff des Anspruches 1.

Im Allgemeinen bestehen herkömmliche Filter zum Reinigen von bei biologischen Abbauprozessen gebildeter Abluft, wie sie insbesondere in der Landwirtschaft auftreten, aus Materialien biologischen Ursprungs wie beispielsweise Holz, Stroh, Torf oder Heu in verschiedener Zusammensetzung und unterschiedlichem Aufbau.

In der Druckschrift WO 01/19498 A1 wird ein Filter zur Reinigung von Abluft offenbart, der aus einer ersten Schicht aus Stroh und einer zweiten ligninhaltigen Schicht besteht.

Das Dokument DE 36 41 178 C2 beschreibt einen Filter zur Reinigung von Abgasen, die organische Verunreinigungen enthalten mit einer Trägerschicht aus einer Mischung von Torf, Kalziumcarbonat, vegetarischen Abfällen, Kompost oder Baumrinde, wobei die Trägerschicht mit Mikroorganismen besiedelt ist.

Ferner wird in der Druckschrift DE 38 07 033 A1 ein Filter zur Reinigung von Abgasen mit organischen Verbindungen offenbart, der mit Weißfäulpilzen bewachsen ist.

Aus der Druckschrift DE 298 11 063 U1 ist ein Filter bekannt, der eine Kompost- und/oder Humusmischung in einer Schicht aus zerkleinertem Holz verwendet.

In der Druckschrift DE 101 10 519 A1 wird ein Filter zur Reinigung von Luft aus Tierställen mit einer ersten tragenden Schicht aus Holzschwarten und einer sich stromab anschließenden Schicht aus feinerem, nicht sauer reagierendem Holzmaterial beschrieben.

Die DE 42 35 591 A1 beschreibt einen Biofilter zum Reinigen von organisch belasteter Abluft, der ein horizontales, luftdurchlässiges von der Abluft durchströmtes Filtersubstrat als Trägermaterial für bioaktive, die organische Abluftbelastung verzehrende Mikroorganismen enthält. Das Filtersubstrat ist aus einem losen Haufwerk weicher feiner Teilchen, wie Holzschnipsel, Holzmehl, Kork- oder Schaumstoffgranulat, Fasern und dergleichen gebildet und ist von einer luftdurchlässigen Unterlage abgestützt. Oberhalb des Filtersubstrates ist eine Bewässerungseinrichtung zum Feuchthalten der Mikroorganismen im Filtersubstrat angeordnet.

Filter dieser Art, die auf biologischen Materialien basieren, weisen den Nachteil auf, dass das biologische Material Zersetzungsprozessen unterliegt. Durch diese Verwesung tritt im Lauf der Zeit eine Verringerung der Wirksamkeit des Filters auf, so dass nach bestimmten Zeitintervallen ein Austausch der Filtermasse notwendig wird.

Der Erfindung liegt daher die **Aufgabe** zugrunde, einen Filter bereitzustellen, der nur geringen oder kaum Zersetzungsprozessen unterworfen ist, wobei nach Möglichkeit kostengünstiges Filtermaterial eingesetzt werden soll.

Diese Aufgabe wird durch einen Filter gemäß Anspruch 1 gelöst.

Ein wesentlicher Kerngedanke ist es daher, Kunststoffe einzusetzen, die relativ inert sind und auch nach längerer Zeit in einer feuchten, chemisch aggressiven Umgebung keine Zersetzung erfahren. Ferner sind Kunststoffe verhältnismäßig preiswert in der Herstellung, wobei die Materialeigenschaften wie Teilchengröße, Porosität, Dichte, Grenzflächeneigenschaften usw. fast beliebig variiert und den jeweiligen Anforderungen angepasst werden können.

Die Befeuchtungseinrichtung sorgt für einen konstanten Feuchtigkeitsgehalt des Filtermaterials und eine gleichmäßige Verteilung der Feuchtigkeit.

Bevorzugt sind die Kunststoffe recycelte Kunststoffe. Insbesondere im Hinblick auf Gesichtspunkte des Umweltschutzes sind recycelte Kunststoffe aufgrund ihres ökologischen Herstellungsverfahrens von Vorteil. Ferner sind die Herstellungskosten im Vergleich zu einer Neuherstellung geringer, wodurch in Verbindung mit einer langen Lebensdauer eine kostengünstige Betriebsweise des Filters resultiert.

In einer bevorzugten Ausführungsform des erfindungsgemäßen Filters sind die Kunststoffe Faserverbundwerkstoffe.

Faserverbundwerkstoffe sind sehr inerte Kunststoffe, die selbst in einer chemisch äußerst aggressiven Umgebung nicht zersetzt werden. Dadurch kann der Filter über einen langen Zeitraum betrieben und eine kostengünstige Instandhaltung gewährleistet werden, da zeit- und kostenintensive Filterwechsel vermieden werden.

Es ist vorteilhaft, wenn die Faserverbundwerkstoffe recycelte Faserverbundwerkstoffe sind. Recycelte Faserverbundwerkstoffe sind insbesondere unter ökologischen Gesichtspunkten und der niedrigen Herstellungskosten von Vorteil.

Zweckmäßiger Weise können die recycelten Faserverbundwerkstoffe durch Recycling von Altteilen aus industriellen Anwendungen, insbesondere aus der Automobilindustrie oder aus Rotorblättern von Windkraftanlagen, erhalten werden. In diesen Bereichen fallen verhältnismäßig große Mengen an Faserverbundwerkstoffen an, die einen niedrigen Preis der daraus recycelten Werkstoffe ermöglichen.

Die Faserverbundwerkstoffe bestehen vorzugsweise aus einem Matrixmaterial und einem Verstärkungsmaterial.

Als Matrixmaterialien können bevorzugt Thermoplaste wie beispielsweise Polyethylen oder Polypropylen und Duroplaste wie beispielsweise Polyester, Epoxit oder Polyurethane verwendet werden. Diese Materialien werden in großem Maßstab hergestellt und sind somit preiswert verfügbar. Ferner zeichnen sich diese Stoffklassen durch eine hohe Widerstandsfähigkeit gegenüber chemischen und mechanischen Einwirkungen aus.

Auch ist es vorteilhaft, wenn das Verstärkungsmaterial ausgewählt ist aus der Gruppe bestehend aus Glasfaser, Kohlenstofffaser, Aramidfaser, Textilfaser und Naturfaser oder dergleichen. Diese Faserarten erhöhen die Stabilität der verwendeten Faserverbundwerkstoffe, bilden eine faserige Oberfläche und erhöhen dadurch Lebensdauer und Kosteneffizienz des Filters.

In einer bevorzugten Ausführungsform des erfindungsgemäßen Filters ist das Filtermaterial in mehreren Schichten angeordnet.

Dabei ist es vorteilhaft, wenn sich die Schichten hinsichtlich Schichtdicke, mittlerer Struktur- oder Teilchengröße und/oder Zusammensetzung unterscheiden.

Im Verlauf des Filterprozesses ändern sich die chemischen und physikalischen Eigenschaften der Abluft, wodurch es notwendig wird, entsprechend den vorliegenden Eigenschaften der Abluft auch die Eigenschaften des Filtermaterials anzupassen, um eine effektive Reinigung zu ermöglichen.

Ein vorteilhafter Aufbau wird erreicht, wenn die Schichten von unten nach oben eine abnehmende mittlere Struktur- oder Teilchengröße aufweisen. Auf diese Weise können die weiter unten liegenden Schichten mit den größeren Teilchen als tragende Systeme für die darüber liegenden Schichten mit den kleineren Teilchen dienen. Ferner wird in der Abluft im Verlauf des Filtervorgangs die Konzentration an Verunreinigungen und der Feuchtigkeitsgehalt abnehmen, so dass sich eine Erhöhung der spezifischen Oberfläche durch eine Abnahme der Teilchengröße günstig auf eine notwendig werdende stärkere Absorption der in der Abluft enthaltenen Schadstoffe und Feuchtigkeit auswirkt.

In einer bevorzugten Ausführungsform des erfindungsgemäßen Filters ist das Filtermaterial mit einem feuchtigkeitsspeichernden Material vermischt. Dadurch wird die Verweilzeit der durch die Befeuchtungsanlage in das Filtermaterial eingeführten Feuchtigkeit erhöht und der Verlust von Wasserdampf durch konvektiven Abtransport erniedrigt. Zudem wird durch die in dem Filtermaterial gehaltene Feuchtigkeit zum einen die Absorption von Verunreinigungen aus der Abluft verbessert und zum anderen werden biologische Abbauprozesse unterstützt.

Geeigneter Weise wird als feuchtigkeitsspeicherndes Material ein schwammartiges, hygroskopisches Material verwendet. Eine schwammartige Struktur bewirkt durch die große spezifische Oberfläche eine hohe physikalische Feuchtigkeitsspeicherung, während die hygroskopische Eigenschaft die Aufnahme von Feuchtigkeit über chemische Wechselwirkungen unterstützt. So weisen beispielsweise gebrannte Kieselgurteilchen, die im Handel kostengünstig erhältlich sind, die genannten Eigenschaften einer schwammartigen Struktur in Verbindung mit hygroskopischen Eigenschaften auf.

Erfindungsgemäß ist das Filtermaterial auf durchströmbaren Rosten vorgesehen. Hierfür können luftdurchlässige Matten wie beispielsweise Gittermatten, Lochplatten und dergleichen verwendet werden. Das auf diesen Rosten gelagerte Filtermaterial kann im Bedarfsfall einfach ausgetauscht werden.

Dabei können die Roste auch zwischen den jeweiligen Schichten des Filtermaterials vorgesehen sein, um beispielsweise je nach Art und Zusammensetzung der Abluft durch Wechsel der Filterschichten die Struktur des Filters einfach anpassen zu können.

Insbesondere können die Schichten ausgetauscht werden, die im Verlauf der Reinigung der Abluft am stärksten verunreinigt wurden, oder durch Zusammenballen von Filterteilchen an Wirksamkeit verloren haben. Ein kostenintensiver Austausch des gesamten Filtermaterials wird somit überflüssig, da lediglich die betroffenen Schichten getrennt ausgetauscht werden können.

In einer weiterhin bevorzugten Ausführungsform der Erfindung ist der Filter, der auch als Biofilter bezeichnet werden kann, mit Mikroorganismen beimpft oder mit eiweißhaltigen Substanzen, wie beispielsweise Enzymen, behandelt. Diese Mikroorganismen oder eiweißhaltigen Substanzen sind in der Lgae organische Verunreinigungen und Schadstoffe aus der Abluft aufzunehmen und in unschädliche Substanzen umzuwandeln.

Zudem werden durch die Mikroorganismen oder eiweißhaltigen Substanzen krankheitserregende Bakterien und Keime, die in der Abluft enthalten sein können, abgetötet, so dass die Abluft im Wesentlichen frei von Schadstoffen und Krankheitserregern in die Umgebung abgegeben werden kann.

Die Mikroorganismen oder eiweißaltigen Substanzen sind verhältnismäßig widerstandsfähig gegen äußere Einflüsse, zeigen eine hohe Aktivität bei der Aufnahme und Umsetzung organischer Stoffe und sind weitgehend ungefährlich, so dass keine Gefährdung durch eine unkontrollierte Ausbreitung der Keime außerhalb des Filters oder eine Übertragung von Krankheiten auf den Menschen besteht. Damit kann der Filter auch im Nahbereich zu Wohngebieten eingesetzt werden.

Vorteilhafter Weise erfolgt die Beimpfung mit Mikroorganismen oder die Behandlung mit eiweißhaltigen Substanzen zeitabhängig, nach langem Stillstand, oder nach einem definierten Volumendurchsatz. Um einer variierten Konzentration.an organischen Verunreinigungen in der Abluft effektiv entgegenwirken zu können, ist es erforderlich, den Einsatz der Mikroorganismen geeignet zu verändern, da diese nur ein begrenztes Potenzial zur Aufnahme und Verarbeitung der Schadstoffe aufweisen. So wird es nach einem Stillstand oder einer niedrigen Schadstoffkonzentration erforderlich sein, bei Beimpfung nach einer verhältnismäßig kurzen Zeit oder nach ungünstigen Volumendurchsatz zu wiederholen.

Es ist erfindungsgemäß, wenn der Filter Biomaterial aufweist.

Biomaterial, also Material biologischen Ursprungs, wie beispielsweise Holz, Heu, Stroh, Wolle, Torf, Humus, Kompost etc. oder deren Bestandteile wie Cellulose, Lignin, Keratin und andere Naturpolymere, sind in großen nachwachsenden Ressourcen vorhanden und können häufig verhältnismäßig kostengünstig gewonnen werden. Ferner weisen sie zumeist vorteilhafte Materialeigenschaften wie eine geringe Dichte und eine hohe Porosität auf und können nach dem Einsatz einfach und ökologisch verträglich entsorgt werden. Zudem können sich eventuell zugesetzte Mikroorganismen in einer Umgebung aus natürlichem Biomaterial besonders gut entwickeln.

Geeigneterweise ist das Biomaterial in einer oder in mehreren Schichten stromabwärts und stromaufwärts vom Filtermaterial angeordnet.

Bei einer stromaufwärtigen Anordnung des Biomaterials kann dieses als Vorfilter dienen, wobei die größeren Partikel und gröbere Verunreinigungen abgefangen werden und das eigentliche Filtermaterial geschont wird.

Bei einer stromabwärtigen Anordnung können durch das Biomaterial verbleibende Verunreinigungen, welche das Filtermaterial passiert haben, aufgenommen werden. Dies betrifft beispielsweise Reste von geruchserzeugenden Verbindungen, welche durch die im Biomaterial anwesenden Mikroorganismen endgültig zersetzt werden.

Bevorzugt ist das Biomaterial holzhaltig.

Holzhaltige Biomaterialien sind in großem Umfang in der Biosphäre vorhanden und entsprechend kostengünstig zu erwerben.

Die relativ geringe mechanische Festigkeit erlaubt eine einfache Verarbeitung in quasi jede beliebige Teilchengeometrie und -größe.

Zudem kann durch eine entsprechende thermische und/oder mechanische Aufbereitung die spezifische Oberfläche des Materials in einem weiten Bereich variiert werden.

Es ist weiter anzustreben, dass stromabwärts vom Filtermaterial angeordnetes Biomaterial eine kleinere mittlere Struktur oder Teilchengröße aufweist als stromaufwärts vom Filtermaterial angeordnetes Biomaterial.

In stromabwärtiger Richtung nimmt der Grad der Verunreinigung und die mittlere Teilchengröße der Schadstoffe ab. Um dennoch einen weiteren Reinigungseffekt zu erzielen, kann diesem Effekt über eine ansteigende spezifische Oberfläche durch eine abnehmende Teilchengröße entgegengewirkt werden, da mit zunehmender spezifischer Oberfläche die Absorptions-/Adsorptionsfähigkeit des Materials zunimmt.

Weiterhin können die stromaufwärts angeordneten größeren Teilchen aufgrund ihrer höheren mechanischen Festigkeit als Stützmaterial für die darüberliegenden Schichten dienen.

Erfindungsgemäß ist das Filtermaterial in einer oder in mehreren Zwischenfilterschichten angeordnet, wobei stromaufwärts sowie stromabwärts vom Filtermaterial das Biomaterial angeordnet ist.

Dadurch kann das Filtermaterial spezifisch auf die Aufgabe als Kernfilter angepasst werden, während das Biomaterial die Funktion eines Vorfilters, bei stromaufwärtiger Anordnung, und die eines nachbereitenden Filters, bei stromabwärtiger Anordnung, übernimmt.

Es ist zweckmäßig, wenn das Biomaterial auf durchströmbaren Rosten vorgesehen ist. Hierfür können luftdurchlässige Matten wie beispielsweise Gittermatten, Lochplatten und dergleichen zum Einsatz kommen. Bei Bedarf kann das auf diesen Rosten gelagerte Filtermaterial einfach ausgetauscht werden.

Die Roste können dabei auch zwischen den jeweiligen Schichten des Biomaterials vorgesehen sein, um entsprechend der Art und Zusammensetzung der Abluft durch Wechsel der Schichten die Struktur des Filters einfach anpassen zu können.

Vor allem können die Schichten ausgetauscht werden, die im Verlauf der Reinigung der Abluft am stärksten verunreinigt wurden, durch Zusammenballen von Filterteilchen an Wirksamkeit verloren haben, oder durch Zersetzungsprozesse bereits stark abgebaut wurden. Ein kostenintensiver Austausch des gesamten Biomaterials wird somit überflüssig, da lediglich die betroffenen Schichten getrennt ausgetauscht werden können.

In einer weiteren bevorzugten Ausführungsform der Erfindung weist der erfindungsgemäße Filter eine stromaufliegende Absetzkammer auf. In der Absetzkammer wird durch deren verhältnismäßig großen Strömungsquerschnitt die Strömungsgeschwindigkeit der zugeführten Abluft deutlich verringert, so dass sich größere Partikel, die sich in der Abluft befinden, infolge der Schwerkraft absetzen können und nicht in den Filter gelangen.

Auch kann die Absetzkammer eine Bodenspülung aufweisen. Mit dieser Bodenspülung können die Partikel, welche sich in der Absetzkammer angesammelt haben, abgetragen und in einen geeigneten Behälter geleitet werden.

Besonders vorteilhaft ist es, wenn der Boden der Absetzkammer als schiefe Ebene ausgebildet ist. Die Öffnung zum Wassereinlass befindet sich dann auf der erhöhten Seite der Ebene, während sich auf der tiefer gelegenen Seite ein Auslass befindet. Die abgesetzten Teilchen werden dabei von dem eingelassenen Wasser weggespült und durch den Auslass einem Behälter zugeführt.

Es ist weiter anzustreben, dass die Abluft der Absetzkammer von unten zugeführt wird.

Die dem Filter zugeführte Abluft erfährt dadurch eine Änderung der Strömungsrichtung um mindestens 90°. Die in der Strömung enthaltenen Teilchen werden dabei durch die auftretenden Kräfte im verstärkten Maß in der Absetzkammer abgesetzt.

In einer besonders vorteilhaften Ausführungsform des erfindungsgemäßen Filters weist der Filter zumindest eine Regeleinrichtung, z.B. als Gebläse- oder Ventilatoreinrichtung zur Regelung der dem Filter zugeführten Abluft auf. Mit dieser Gebläse- oder Ventilatoreinrichtung kann das Volumen der dem Filter zugeführten Abluft, insbesondere in Abhängigkeit von der im Stallbereich vorliegenden Temperatur oder/und der vorliegenden Konzentration an organischen Verunreinigungen eingestellt werden.

Der Volumenstrom wird primär temperaturgesteuert, d.h. der Filter wird bei hoher Temperatur mit einem hohen Volumenstrom und bei niedriger Temperatur mit einem niedrigen Volumenstrom betrieben, wobei zusätzlich die Schadstoffkonzentration insoweit mit berücksichtigt werden kann, als bei einer hohen Konzentration unter Berücksichtigung der begrenzten Kapazität des Filters ein geringerer Volumenstrom vorteilhaft ist, während bei einer niedrigen Konzentration an Schadstoffen auch ein höherer Volumenstrom an Abluft vom Filter verarbeitet werden kann.

Zur Messung des Feuchtigkeitsgehalts im Filtermaterial kann ein Feuchtigkeitssensor dienen, der mit der Befeuchtungsanlage verbunden ist und diese steuert. Eine gleichmäßige Befeuchtung des Filtermaterials ist wesentlich für die Absorption der Schadstoffe im Filtermaterial sowie für eine optimale Aktivität der im Filtermaterial befindlichen Mikroorganismen.

Ferner ist es zweckmäßig, wenn der Filter mit einem korrosionsbeständigen Material, insbesondere mit Edelstahl, ummantelt ist. Damit kann der Filter auch über längere Zeiträume im Freien betrieben werden.

Weiter ist denkbar den Filter mit wärme- und die Gebläseeinrichtung mit schalldämmenden Materialien auszukleiden.

Die Erfindung wird nachfolgend anhand von schematischen Ausführungsbeispielen unter Bezugnahme auf die Zeichnungen noch näher erläutert. Gleiche Bezugszeichen bezeichnen dabei gleiche Elemente.
Es zeigen:
- Fig. 1: einen Querschnitt durch einen Filter und einen Stallbereich;
- Fig. 2: einen vergrößerten Querschnitt durch einen Filter und
- Fig. 3: einen vergrößerten Querschnitt durch einen Filter mit einer Zwischenfilterschicht aus Filtermaterial und jeweils einer stromaufwärtigen/abwärtigen Schicht aus Biomaterial.

Es sind verschiedene Ausführungsformen des erfindungsgemäßen Filters denkbar. Im Folgenden werden zwei bevorzugte Ausführungsformen beschrieben.

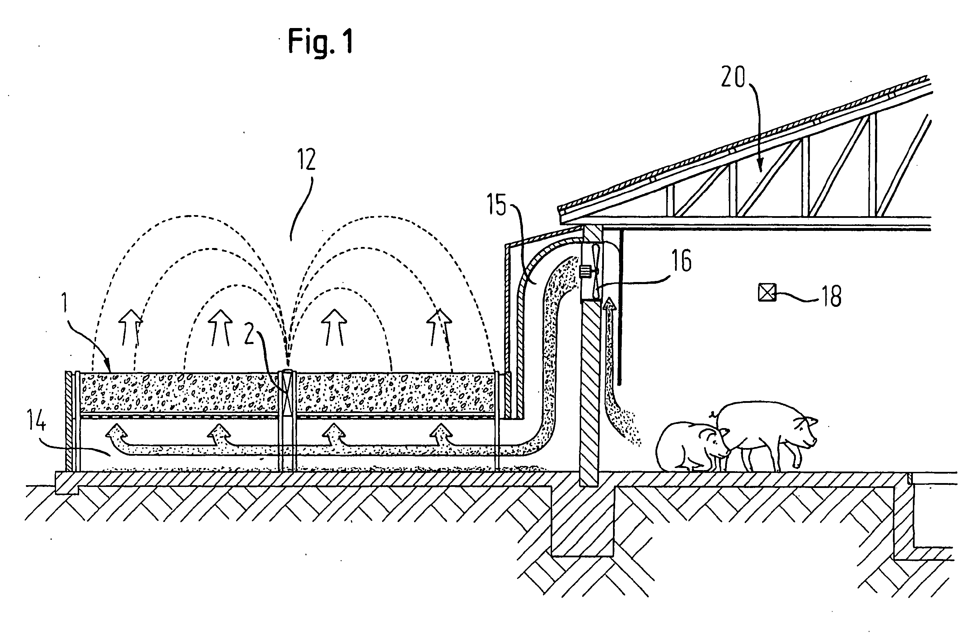

In dem in Fig. 1 gezeigten Beispiel ist der Filter 1 über einen Abluftkanal 15 mit einem Tierstall 20 verbunden. Zwischen dem Stall 20 und dem Filter 1 befindet sich ein Ventilator 16. Der Ventilator 16 saugt Luft aus dem Stall 20 in einen Abluftkanal 15, der einer Absetzkammer 14 vorgeschaltet ist.

Da der Filter 1 einen Strömungswiderstand bildet, baut sich in der Absetzkammer 14 und dem Abluftkanal 15 ein Druck auf. In der angesaugten Luft können sich auch größere Partikel, welche von dem Futter der Tiere, von Federn bzw. Haaren stammen, befinden. Auch Staub wird in der Luft mitgeführt. Diese Partikel können sich im Boden der Absetzkammer 14 absetzen. Der Absetzvorgang der Partikel wird durch zwei Faktoren begünstigt. Zum einen weist die Absetzkammer 14 einen wesentlich größeren Strömungsquerschnitt auf als der vorgeschaltete Abluftkanal 15. Die Strömungsgeschwindigkeit wird dadurch deutlich verringert und die Partikel haben Gelegenheit sich abzusetzen. Ferner wird die Strömungsrichtung zum einen beim Übergang von dem Abluftkanal 15 in die Absetzkammer 14 sowie beim Übergang von der Absetzkammer 14 in den Filter 1 jeweils um etwa 90° umgelenkt, wodurch der Absetzeffekt begünstigt wird.

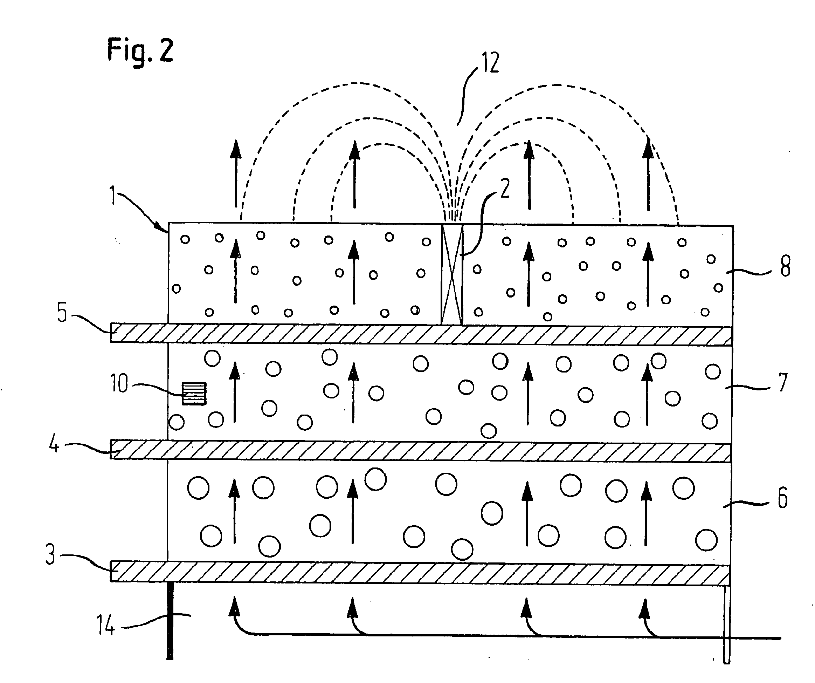

Das Filtermaterial aus recycelten Faserverbundwerkstoffen lagert bevorzugt einschichtig oder auch aufgeteilt in einzelne Schichten 6, 7, 8 auf Rosten 3, 4, 5 (Fig. 2). Die einzelnen Schichten 6, 7, 8 weisen dabei von unten nach oben eine abnehmende Teilchengröße der Faserverbundwerkstoffe auf. Bei bevorzugter einschichtiger Auslegung des Filters 1 und Filtermaterials bildet dieses weitgehend eine homogene Schicht, die auch als Ganzes ausgetauscht werden kann.

Die aus der Absetzkammer 14 in den Filter 1 eintretende Abluft durchströmt die einzelnen Schichten 6, 7, 8 des Filtermaterials und wird dabei von organischen Verunreinigungen befreit. Am Ende des Filters 1 tritt die weitgehend geruchsneutrale, keimfreie, gefilterte Luft 12 aus und wird an die Umgebung abgegeben.

Durch die nach oben abnehmende Teilchengröße des Filtermaterials in den Schichten 6, 7, 8 steigt die spezifische Oberfläche an und sorgt für eine weiter ansteigende Absorptionsfähigkeit des Filtermaterials. Die zwischen den einzelnen Schichten 6, 7, 8 des Filtermaterials vorgesehenen Roste 3, 4, 5 sind luftdurchlässig und erlauben ein Hindurchströmen der Abluft. Zudem können mit Hilfe der Roste 3, 4, 5 die einzelnen Schichten 6, 7, 8 getrennt voneinander ausgetauscht werden.

In dem Filtermaterial befinden sich Mikroorganismen. Diese Mikroorganismen sind in kommerziell erhältlichen Substraten oder Flüssigkeiten (sogenannte "Brottrunke") enthalten. Die Beimpfung des Filters 1 mit den Mikroorganismen kann dann beispielsweise durch Einstreuen oder Aufgießen der die Mikroorganismen enthaltenden Substrate oder der Flüssigkeit von oben in den Filter 1 erfolgen. In Abhängigkeit von der Belastung des Filters 1 kann die Beimpfung mit Mikroorganismen nach längerem Stillstand, nach bestimmten Zeitintervallen oder nach einem bestimmten Volumendurchsatz wiederholt werden. Die Mikroorganismen sind in der Lage, die in der Abluft vorhandenen Gase wie beispielsweise Methan, Ammoniak und Kohlendioxid aufzunehmen und umzusetzen.

Darüber hinaus können Krankheitserreger wie Fäkalbakterien oder Streptokokken, die sich in der Abluft befinden können, ebenfalls von den Mikroorganismen unschädlich gemacht werden. Neben dieser mikrobiologischen Reinigung erfolgt durch die Absenkung der Strömungsgeschwindigkeit sowie durch die zweifache Änderung der Strömungsrichtung auch eine Abtrennung von größeren Teilchen. Durch diese beiden Reinigungsschritte, d.h. der mechnischen Reinigung durch den Absetzvorgang sowie die mikrobiologische Reinigung durch die Mikroorganismen erfolgt eine weitgehende Filterung der aus dem Tierstall 20 abgesaugten Abluft, die anschließend an die Umgebung abgegeben werden kann, ohne die Umwelt mit störenden Gerüchen oder Krankheitserregern zu belasten.

Innerhalb einer oder mehrerer Schichten 6, 7, 8 des Filtermaterials befindet sich ein Feuchtigkeitssensor 10, welcher den Feuchtigkeitsgehalt innerhalb einer oder mehrerer Schichten 6, 7, 8 des Filtermaterials misst und bei Bedarf die Befeuchtungseinrichtung 2 aktiviert.

Ein anderer Luftsensor 18 kann innerhalb des Stalles 20 vorgesehen sein und misst die vorliegende Luftbelastung an organischen Schadstoffen oder größeren Partikeln.

In Abhängigkeit von der gemessenen Temperatur oder Luftbelastung im Stall 20 wird die Aktivität des Ventilators 16 geregelt, der die Abluft aus dem Stall 20 absaugt. Dadurch können gesetzlich festgelegte Grenzwerte von Schadstoffkonzentrationen in Tierställen eingehalten werden.

In Fig. 2 wird anhand eines vergrößerten Querschnitts durch einen Filter 1 die schematische Funktionsweise des Filters 1 dargestellt.

Die Abluft strömt in die Absetzkammer 14 ein, wobei sich die Strömungsgeschwindigkeit deutlich erniedrigt und sich größere Partikel am Boden der Absetzkammer 14 absetzen können.

Bevor die Abluft in den Filter 1 einströmt, erfolgt eine Änderung der Strömungsrichtung um etwa 90°, wodurch der Absetzvorgang größerer Partikel unterstützt wird.

Nachfolgend durchströmt die Abluft die einzelnen Schichten 6, 7, 8 des Filtermaterials bzw. der Filtermasse, welche auf durchströmbaren Rosten 3, 4, 5 lagern.

Die mittlere Teilchengröße des Filtermaterials nimmt dabei innerhalb der Schichten 6, 7, 8 von unten nach oben ab. Dadurch wird berücksichtigt, dass die Konzentration an Verunreinigungen durch die Aktivität der in den Schichten 6, 7, 8 befindlichen Mikroorganismen in gleicher Weise abnimmt.

Um eine ausreichende Absorption und Adsorption der Schadstoffe zu gewährleisten, ist es erforderlich, einer niedrigeren Konzentration an Schadstoffen über eine Erhöhung der spezifischen Oberfläche des Filtermaterials durch eine Erniedrigung der mittleren Teilchengröße zu begegnen. Je höher die spezifische Oberfläche des Filtermaterials, desto größer ist die zur Absorption bereitgestellte Fläche, die für die Verunreinigungen zur Verfügung steht.

Die einzelnen Schichten 6, 7, 8 lagern auf getrennten, durchströmten Rosten 3, 4, 5, die getrennt voneinander ausgetauscht werden können. Dadurch ist es möglich, einzelne Bereiche des Filter in Abhängigkeit von der Abnahme der Wirksamkeit durch Verschmutzung, Zersetzung, Zusammenballen von Filtermaterialteilchen etc. auszutauschen, ohne dass ein vollständiger Filterwechsel erfolgen muss.

Nach Durchströmen der oberen Schicht 8 ist die Abluft weitgehend von organischen Verunreinigungen und Keimen befreit und kann als gefilterte Luft 12 an die Umgebung abgegeben werden, ohne diese mit störenden Gerüchen oder Krankheitserregern zu belasten.

Innerhalb einer der Schichten 6, 7, 8 ist ein Feuchtigkeitssensor 10 vorgesehen, der den Feuchtigkeitsgehalt misst und gegebenenfalls eine Befeuchtungseinrichtung 2 aktiviert.

Ein bestimmter Feuchtigkeitsgehalt des Filtermaterials ist wesentlich um zum einen die Absorptionsfähigkeit des Filtermaterials zu verbessern und zum anderen notwendige Stoffaustauschprozesse zu unterstützen. Ferner sind viele Mikroorganismen auf eine gewisse Feuchtigkeit zur Aufrechterhaltung ihrer Populationsdichte angewiesen. Zudem eignet sich Wasser aufgrund seiner hohen spezifischen Wärmekapazität sehr gut als Wärmereservoir und dient zum Ausgleich eventuell auftretender Temperaturgradienten.

Die Befeuchtungseinrichtung 2 verteilt die Feuchtigkeit möglichst homogen von oben auf die oberste Schicht 8. Durch die Schwerkraft und Kapillareffekte wird die Feuchtigkeit dann in die weiter unten liegenden Schichten 7 und 6 verteilt.

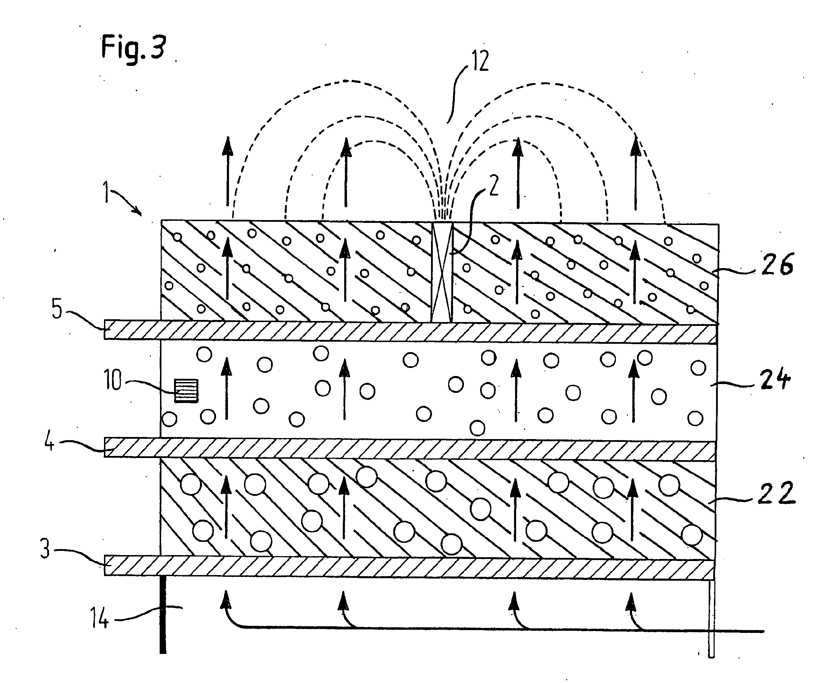

In einer weiteren in Fig. 3 gezeigten Ausführungsform weist der Filter 1 eine mittig angeordnete Zwischenfilterschicht 24 aus Kunststoff sowie eine stromaufwärts liegende Schicht 22 und eine stromabwärts liegende Schicht 26 aus Biomaterial auf. Die einzelnen Schichten 22, 24 und 26 lagern auf Rosten 3, 4 und 5 und weisen von unten nach oben eine abnehmende Teilchengröße aus Kunststoff bzw. Biomaterial auf.

Die aus der Absetzkammer 14 in den Filter 1 eintretende Abluft durchströmt zunächst die untere Schicht aus Biomaterial 22, die als Vorfilter fungiert. In dieser Schicht werden größere Partikel, die sich in der Abluft befinden, aufgenommen und erste Abbauprozesse organischer Verunreinigungen durch die Mikroorganismen eingeleitet.

Anschließend tritt die Abluft in die als Kernfilter wirkende Zwischenfilterschicht 24 ein, in der eine weitere Reinigung durch physikalische Absorption/Adsorption und durch mikrobiologischen Abbau erfolgt.

Nachfolgend strömt die Abluft in eine weitere Schicht 26 aus Biomaterial ein, in der hauptsächlich der endgültige Abbau geruchsintensiver organischer Verbindungen stattfindet und tritt als weitgehend geruchsneutrale, keimfreie, gefiltere Luft 12 aus dem Filter 1 aus und wird an die Umgebung abgegeben.

### Bezugszeichenliste:

- 1: Filter
- 2: Befeuchtungseinrichtung
- 3: Rost (unten)
- 4: Rost (mitte)
- 5: Rost (oben)
- 6: Schicht (unten)
- 7: Schicht (mitte)
- 8: Schicht (oben)
- 10: Feuchtigkeitssensor
- 12: gefilterte Luft
- 14: Absetzkammer
- 15: Abluftkanal
- 16: Ventilator
- 18: Luftsensor
- 20: Stall
- 22: stromaufwärtige Schicht aus Biomaterial
- 24: Zwischenfilterschicht aus Kunststoff
- 26: stromabwärtige Schicht aus Biomaterial

## Patentansprüche

1. Filter zum Reinigen von bei biologischen Abbauprozessen gebildeter Abluft, wobei der Filter Filtermaterial und Biomaterial aufweist,
eine Befeuchtungseinrichtung vorgesehen ist,
das Filtermaterial sowie das Biomaterial schichtförmig auf durchströmbaren Rosten getrennt voneinander austauschbar angeordnet sind,
wobei das Filtermaterial Kunststoffe aufweist,
wobei das Biomaterial stromaufwärts sowie stromabwärts vom Filtermaterial angeordnet ist, und
das Filtermaterial mindestens eine oder mehrere getrennt voneinander austauschbare Schichten aufweist.

2. Filter nach Anspruch 1,
**dadurch gekennzeichnet,**
**dass** die Kunststoffe Faserverbundwerkstoffe sind.

3. Filter nach Anspruch 2,
**dadurch gekennzeichnet,**
**dass** die Faserverbundwerkstoffe ein Matrixmaterial und ein Verstärkungsmaterial aufweisen.

4. Filter nach Anspruch 3,
**dadurch gekennzeichnet,**
**dass** das Matrixmaterial ein Thermoplast oder ein Duroplast ist.

5. Filter nach Anspruch 3 oder 4,
**dadurch gekennzeichnet,**
**dass** das Verstärkungsmaterial ausgewählt ist aus der Gruppe bestehend aus Glasfaser, Kohlenstofffaser, Aramidfaser, Textilfaser und Naturfaser.

6. Filter nach einem der Ansprüche 1 bis 5,
**dadurch gekennzeichnet,**
**dass** sich die Schichten hinsichtlich Schichtdicke, mittlerer Struktur- oder Teilchengröße und/oder Zusammensetzung unterscheiden.

7. Filter nach Anspruch 6,
**dadurch gekennzeichnet,**
**dass** die Schichten von unten nach oben eine abnehmende mittlere Struktur- oder Teilchengröße aufweisen.

8. Filter nach einem der Ansprüche 1 bis 7,
**dadurch gekennzeichnet,**
**dass** das Filtermaterial mit einem feuchtigkeitsspeichernden Material vermischt ist.

9. Filter nach Anspruch 8,
**dadurch gekennzeichnet,**
**dass** das feuchtigkeitsspeichernde Material ein schwammartiges hygroskopisches Material ist.

10. Filter nach einem der Ansprüche 1 bis 9,
**dadurch gekennzeichnet,**
**dass** der Filter mit Mikroorganismen beimpft oder mit eiweißhaltigen Substanzen behandelt ist.

11. Filter nach einem der Ansprüche 1 bis 10,
**dadurch gekennzeichnet,**
**dass** das Biomaterial zumindest ein Naturpolymer aufweist.

12. Filter nach einem der Ansprüche 1 bis 11,
**dadurch gekennzeichnet,**
**dass** das Biomaterial holzhaltig ist.

13. Filter nach einem der Ansprüche 1 bis 12,
**dadurch gekennzeichnet,**
**dass** eine stromaufliegende Absetzkammer vorgesehen ist, die insbesondere eine Bodenspülung aufweist.

14. Filter nach Anspruch 13,
**dadurch gekennzeichnet,**
**dass** die Abluft der Absetzkammer von unten zugeführt ist.

15. Filter nach einem der Ansprüche 1 bis 14,
**dadurch gekennzeichnet,**
**dass** eine Regeleinrichtung zur Zufuhr der Abluft zum Filter vorgesehen ist.

## Claims

1. Filter for purifying outgoing air formed during biological decomposition processes, whereby the filter comprises filter material and biomaterial,
a moistening unit is provided,
the filter material and the biomaterial are arranged so that they can be exchanged separately from each other in layers on gratings through which a flow can pass,
wherein the filter material comprises plastics,
wherein the biomaterial is arranged upstream and downstream of the filter material and
the filter material comprises at least one or more layers which can be exchanged separately from each other.

2. Filter according to claim 1,
**characterised in that**
the plastics are fibre composites.

3. Filter according to claim 2,
**characterised in that**
the fibre composites comprise a matrix material and a reinforcement material.

4. Filter according to claim 3,
**characterised in that**
the matrix material is a thermoplastic material or a duroplastic material.

5. Filter according to claim 3 or 4,
**characterised in that**
the reinforcement material is selected from the group consisting of glass fibre, carbon fibre, aramid fibre, textile fibre and natural fibre.

6. Filter according to one of the claims 1 to 5,
**characterised in that**
the layers differ having regard to layer thickness, average structure or particle size and / or composition.

7. Filter according to claim 6,
**characterised in that**
the layers comprise from bottom to top a decreasing average structure or particle size.

8. Filter according to one of the claims 1 to 7,
**characterised in that**
the filter material is mixed with a moisture-storing material.

9. Filter according to claim 8,
**characterised in that**
the moisture-storing material is a sponge-like hygroscopic material.

10. Filter according to one of the claims 1 to 9,
**characterised in that**
the filter is immunised with micro-organisms or with protein containing substances.

11. Filter according to one of the claims 1 to 10,
**characterised in that**
the biomaterial comprises at least one natural polymer.

12. Filter according to one of the claims 1 to 11,
**characterised in that**
the biomaterial contains wood.

13. Filter according to one of the claims 1 to 12,
**characterised in that**
a settling chamber lying upstream is provided which in particular comprises bottom flushing.

14. Filter according to claim 13,
**characterised in that**
the outgoing air of the settling chamber is fed from below.

15. Filter according to one of the claims 1 to 14,
**characterised in that**
a control unit is provided for feeding the outgoing air to the filter.

## Revendications

1. Filtre pour purifier de l'air formé par des processus de décomposition biologique, dans lequel le filtre comprend un matériau filtrant et un biomatériau,
un dispositif d'humidification est prévu,
le matériau filtrant ainsi que le biomatériau sont placés en couche sur des grilles traversables par l'air, d'une manière interchangeable indépendamment l'un de l'autre,
dans lequel le matériau filtrant comprend des matières plastiques,
dans lequel le biomatériau est placé en amont et en aval du matériau filtrant, et
le matériau filtrant comprend au moins une ou plusieurs couches interchangeables indépendamment l'une de l'autre.

2. Filtre selon la revendication 1, ***caractérisé en ce que*** les matières plastiques sont des matériaux composites renforcés de fibres.

3. Filtre selon la revendication 2, ***caractérisé en ce que*** les matériaux composites renforcés de fibres comprennent un matériau de matrice et un matériau de renforcement.

4. Filtre selon la revendication 3, ***caractérisé en ce que*** le matériau de matrice est un thermoplastique ou un thermodurcissable.

5. Filtre selon la revendication 3 ou 4, ***caractérisé en ce que*** le matériau de renforcement est choisi dans le groupe composé des fibres de verre, des fibres de carbone, des fibres aramide, des fibres textiles et des fibres naturelles.

6. Filtre selon l'une quelconque des revendications 1 à 5, ***caractérisé en ce que*** les couches diffèrent par leur épaisseur de couche, leur taille moyenne de texture ou de particule et/ou leur composition.

7. Filtre selon la revendication 6, ***caractérisé en ce que*** les couches présentent de bas en haut une taille moyenne de texture ou de particule décroissante.

8. Filtre selon l'une quelconque des revendications 1 à 7, ***caractérisé en ce que*** le matériau filtrant est mélangé à un matériau stockant l'humidité.

9. Filtre selon la revendication 8, ***caractérisé en ce que*** le matériau stockant l'humidité est un matériau hygroscopique de type éponge.

10. Filtre selon l'une quelconque des revendications 1 à 9, ***caractérisé en ce que*** le filtre est inoculé avec des microorganismes ou traité avec des substances contenant de l'albumine.

11. Filtre selon l'une quelconque des revendications 1 à 10, ***caractérisé en ce que*** le biomatériau comprend au moins un polymère naturel.

12. Filtre selon l'une quelconque des revendications 1 à 11, ***caractérisé en ce que*** le biomatériau contient du bois.

13. Filtre selon l'une quelconque des revendications 1 à 12, ***caractérisé en ce qu*'**il est prévu une chambre de décantation située en amont, qui comprend en particulier une évacuation de fond.

14. Filtre selon la revendication 13, ***caractérisé en ce que*** l'air est introduit par le bas dans la chambre de décantation.

15. Filtre selon l'une quelconque des revendications 1 à 14, ***caractérisé en ce qu'***un dispositif de régulation est prévu pour envoyer l'air au filtre.
